Europäisches Patentamt

European Patent Office

Office européen des brevets

(11) Publication number: **0 239 330 A2**

# EUROPEAN PATENT APPLICATION

(21) Application number: **87302414.5**

(51) Int. Cl.⁴: **C 03 B 37/16**

(22) Date of filing: **20.03.87**

(30) Priority: **24.03.86 GB 8607287**

(43) Date of publication of application: **30.09.87 Bulletin 87/40**

(84) Designated Contracting States: **DE FR NL**

(71) Applicant: **The General Electric Company, p.l.c., 1 Stanhope Gate, London W1A 1EH (GB)**

(72) Inventor: **Boucouvalas, Anthony Christos, 59 Sherwood Road, South Harrow Middlesex HA2 8AW (GB)**
Inventor: **Georgiou, George Anthony, 45 Oakwood Avenue, South Gate London N14 (GB)**

(74) Representative: **MacKenzie, Ian Alastair Robert et al, The General Electric Company, p.l.c. Central Patent Department Wembley Office Hirst Research Center East Lane, Wembley Middlesex HA9 7PP (GB)**

(54) **Method of terminating optical fibres.**

(57) An optical fibre is terminated by launching light down one end of a monomode fibre, generating a biconical taper in the fibre by the combined action of heat and tension whilst monitoring the light output. The fibre is terminated by clearing the central portion of the biconical taper after at least one power oscillation has been detected in the transmitted light.

HR/2927/EPC

## Improvements in or relating to Optical Fibres

The present invention concerns fibre optics, and in particular the problem which arises when a fibre optic is terminated and it is wished to transmit power from the end of the optical fibre into another fibre or a receiving device.

It has been found that radiation from a carefully cleaved optical fibre has an angular distribution of around $5^{\circ}$ with nearly all the energy being contained within this core. This angle is, however, sufficiently large such that when two cleaved fibre ends are used to transmit and receive power distances of approximately 100 $\mu$m between them are sufficient to produce a 3 dB loss.

One method of combating this loss is to provide each of the ends of the fibres, which are respectively to transmit or receive power, with a Graded Index (GRIN) lens. Such lenses are expensive and difficult to fit.

Another approach has been to produce a taper in a single mode optical fibre. In the known approach a capillary sleeve was placed around the fibre before tapering in order to strengthen the tapered portion along its length. The capillary was then collapsed uniformly around the fibre using a symmetrical intense heat distribution provided by a miniature graphite furnace.

One of the purposes of the intense symmetrical heat source was to prevent mode coupling on tapering as it was considered that this would lead to losses.

It is an object of the present invention to provide a simple method of reducing power loss from the termination of a monomode optical fibre.

Accordingly from one aspect the present invention consists in launching light down one end of a monomode optical fibre the cladding of which has a depressed refractive index profile, detecting the light at the other end of the fibre, subjecting a portion of the fibre to the combined action of heat and tension so as to generate a biconical taper and cause mode coupling within the tapered portion, stopping the tapering and heating when at least one power oscillation of the transmitted light has occurred and the transmission response of the fibre is at a maxima, and cleaving the central portion of the biconical taper to provide a termination which has a relatively narrow far field distribution pattern.

According to another aspect of the present invention an optical device includes at least one fibre having a termination fabricated by the method set out hereinbefore.

In order that the present invention may be more readily understood, an embodiment thereof will now be described by way of example and with reference to the accompanying drawings, in which:

Figure 1 is a graph showing power loss as a function of distance between two cleaved monomode fibres,

Figure 2 is a graph showing power transmission during tapering a monomode optical fibre,

Figure 3 is a graph showing the far field radiation distribution of a tapered and cleaved fibre according to the present invention,

Figure 4 is a graph similar to Figure 3 but showing the result of an untapered fibre,

Figure 5 is a graph showing the near field radiation distribution of the fibre used to produce the graph of Figure 3,

Figure 6 is a graph showing the relative power transmittance between two fibres according to the present invention, and

Figure 7 is a diagrammatic view showing how tapered fibres may be used.

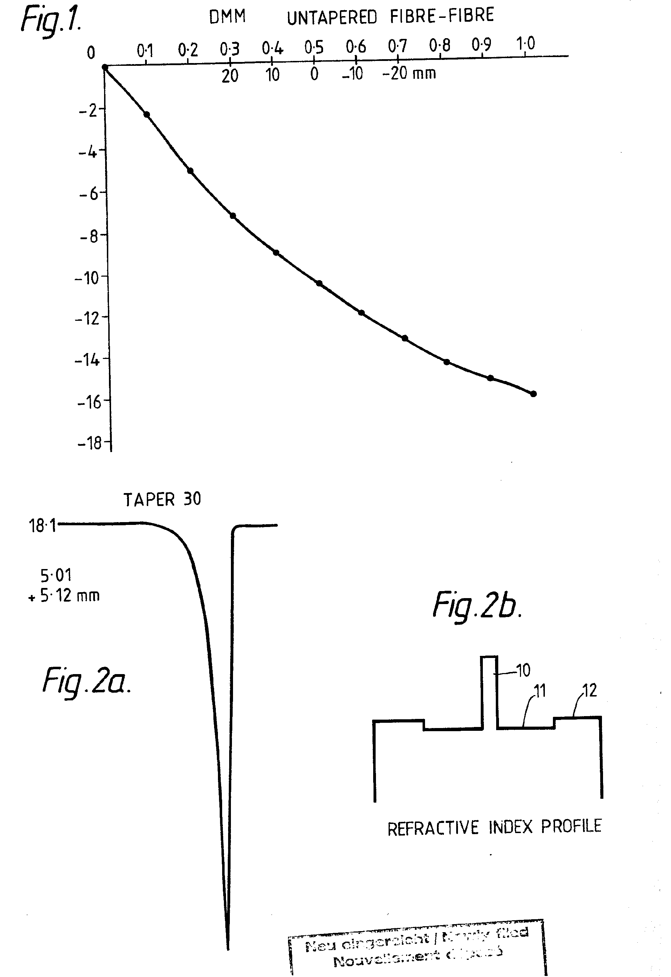

Referring now to the drawings and in particular to Figure 1, this graph shows the relative transmittance between two cleaved monomode fibres as they are moved further and further apart. It can be seen that a loss of 3dB is reached at a separation of just over 100 $\mu$m and that losses increase steadily with separation.

When dealing with the transmission of power between fibre ends the important factor is the far field radiation distribution, which should be as narrow as possible. It is also known that the far field radiation distribution is described by the Hankel transform of the fibre aperture field so that there is a direct relationship between the near and far field radiation distributions. Thus to produce a near parallel output beam from a fibre optic end it is necessary to have a broad near field.

In order to produce such a broad near field the present invention proposes using monomode optical fibres having slightly depressed cladding. The refractive index profile of such a fibre is shown in Figure 2 where 10 shows the index of the core, 11 the index of the inner cladding and 12 the index of the outer cladding. Such a fibre is laid horizontally on a tapering rig, light is launched at one end, detected at the other end and interfaced with a chart recorder. Such a set up is well known. The fibre has a portion treated with an oxy-butane flame, though other heating methods may be used, and subjected to tension so as to cause a biconical taper in the heated portion of the fibre. As the tapering is carried out the power of the transmitted light oscillates. The tapering process is stopped when one complete oscillation has been observed on the chart recorder. The power transmission curve is also shown in Figure 2. The tapered portion of the fibre is then cleaved in the middle providing a taper ratio of approximately 2:1 without the necessity of providing any additional cladding.

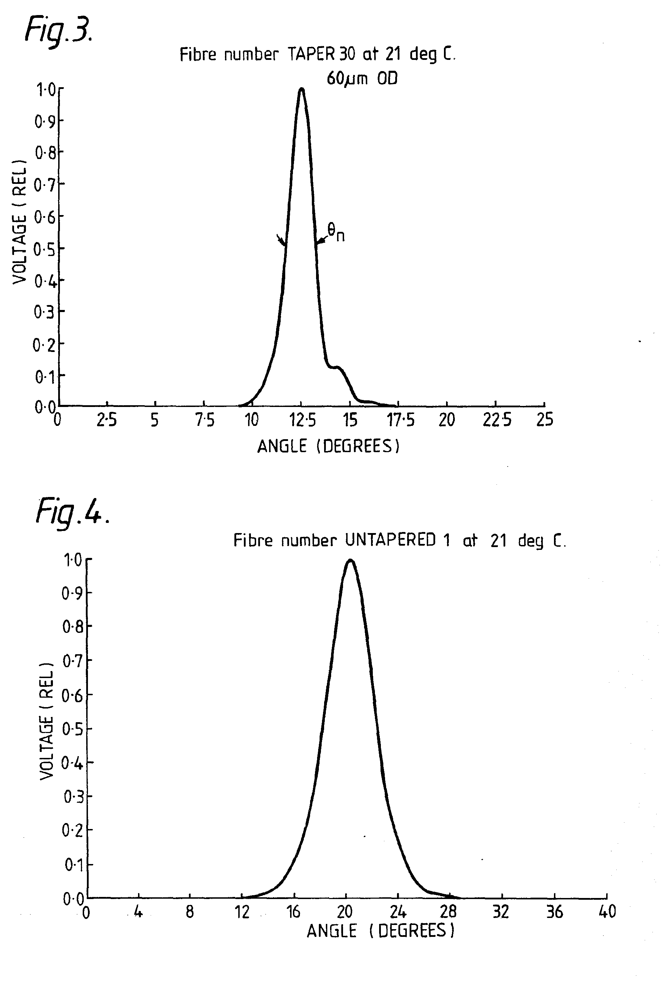

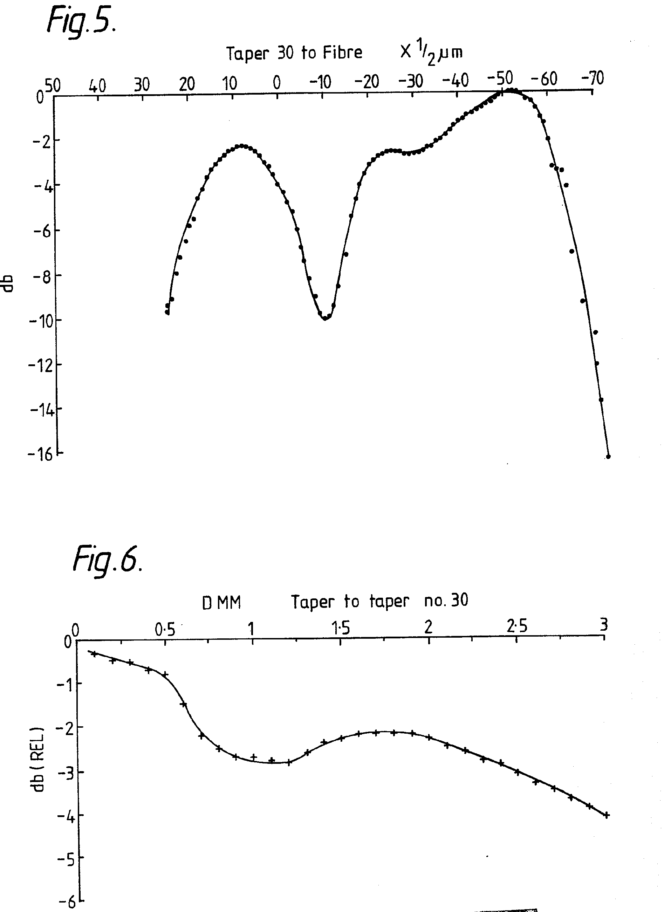

Figure 3 of the drawings shows the result of measuring the far field radiation distribution of the fibre end so produced. This can be compared with the far field radiation distribution of a fibre which has been cleaved without being subjected to the tapering process just described. From these graphs it can be seen that the tapered and cleaved fibre has a far field angle approximately 3 times less than that of the untapered fibre. From this it is clear that there has been a considerable broadening of the near field radiation distribution or field aperture. This near field distribution of the half-tapered fibre is shown in the graph of Figure 5. The measurement was carried out by traversing an untapered fibre as the detecting aperture about the half-tapered fibre. The axial dip is predicted theoretically and the spreading of power across the taper is obvious.

Figure 6 of the drawings shows the relative transmittance between two half-tapers fabricated in accordance with the invention for the situations in which the two tapered ends of the fibres were placed in contact and then separated longitudinally. From this Figure it can be seen that the 3dB loss is not reached until the gap is 2.5mm as compared with the same loss being reached with a 100 $\mu$m gap for untapered fibres.

The result of being able to transmit power over substantial gaps gives many advantages. Thus materials can be inserted between fibres to produce a variety of devices. For example, in the field of fibre optic sensing materials can be inserted between fibre ends which are especially sensitive to the desired measurand such as acoustic, temperature or pressure variations.

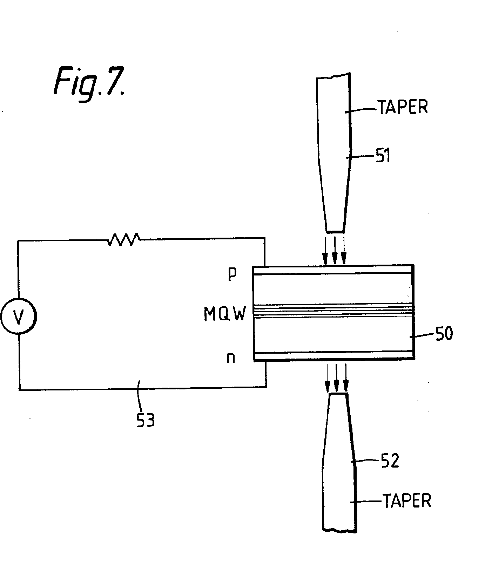

Figure 7 shows another potential application of the invention. In this figure a multiple quantum well device 50 which exhibits bistability has been inserted in a gap between two half-tapered fibre ends 51, 52. 53 shows in very general form a circuit for applying switching voltages to device 50. Such devices can be useful for optical switching and optical computing using fibres.

Other examples of devices which can be fabricated by inserting appropriate material or devices between tapered fibres are polarisers, attenuators, filters, etc.

CLAIMS

1.    A method of terminating optical fibres comprising cleaving the fibre, and characterised in that the point of clevage is selected by steps of:

a)    launching light down one end of a monomode optical fibre the cladding of which has a depressed refractive index profile.

b)    detecting the light emerging at the other end of the fibre,

c)    subjecting a portion of the fibre to the combined action of heat and tension so as to generate a biconical taper and cause mode coupling within the tapered portion.

d)    stopping the tapering and heating when at least one power oscillation of the transmitted light has occurred and the transmission response of the fibre is at a maxima, and

e)    cleaving the central portion of the biconical taper to provide a termination having a relatively narrow far field distribution.

2.    An electro-optical device and characterised in that it contains at least one optical fibre which has been terminated in the manner claimed in Claim 1.

**Fig.1.**

1/4

DMM    UNTAPERED FIBRE-FIBRE

TAPER 30

18·1

5·01
+ 5·12 mm

**Fig.2a.**

**Fig.2b.**

10
11
12

REFRACTIVE INDEX PROFILE

0239330

**Fig.3.**

Fibre number TAPER 30 at 21 deg C.
60µm OD

*Y-axis: VOLTAGE ( REL ) — 0.0 to 1.0*
*X-axis: ANGLE (DEGREES) — 0 to 25*

$\theta_n$

**Fig.4.**

Fibre number UNTAPERED 1 at 21 deg C.

*Y-axis: VOLTAGE ( REL ) — 0.0 to 1.0*
*X-axis: ANGLE ( DEGREES ) — 0 to 40*

## Fig.5.

Taper 30 to Fibre    X ½μm

## Fig.6.

D MM    Taper to taper  no. 30

Fig.7.

TAPER

51

p

MQW

n

50

53

52

TAPER